# EUROPEAN PATENT SPECIFICATION

(11) **EP 2 338 954 B1**
(45) Date of publication and mention of the grant of the patent: **28.11.2018**
(21) Application number: 09820075.1
(22) Date of filing: 07.10.2009
(51) Int. Cl.: C10B 39/02

(54) **COKE DRY QUENCHING FACILITY**
ANLAGE ZUR TROCKENLÖSCHUNG VON KOKS
INSTALLATION D EXTINCTION À SEC DU COKE

(30) Priority: 14.10.2008 JP 2008068582
(43) Date of publication of application: 29.06.2011
(73) Proprietor: Nippon Steel Engineering Co., Ltd., Shinagawa-ku Tokyo 141-8604 (JP)
(72) Inventor: FUKUOKA, Takashi, Fukuoka 8048585 (JP); FUJIKAWA, Atsushi, Fukuoka 8048585 (JP); OTANI, Hiroshi, Fukuoka 8048585 (JP)
(74) Representative: Vossius & Partner Patentanwälte Rechtsanwälte mbB
(86) International application number: PCT/JP2009/005226
(87) International publication number: WO 2010/044219

(56) References cited:
- DE-A1- 19 755 100
- GB-A- 1 061 412
- GB-A- 1 061 412
- JP-A- 54 032 505
- JP-A- 56 098 281
- JP-A- 2004 277 665
- JP-U- 62 153 352
- JP-Y2- 59 017 883
- US-A- 1 462 119
- US-A- 1 496 094
- US-A- 4 416 733

## Description

### TECHNICAL FIELD

The present invention relates to coke dry quenching equipment for cooling coke.

### BACKGROUND ART

Coke dry quenching (CDQ) equipment installed in ironworks and the like is equipment for quenching high temperature coke destructively distilled in a coke oven using a cooling gas such as an inert gas. The high temperature coke is gradually cooled to improve its quality, so that the operation of an ironmaking blast furnace is stabilized. Coke dry quenching equipment is characterized in that the cooling gas is circulated in the system to allow coke dust to be prevented from flying out and that the sensible heat of the coke is recovered by a heat recovery apparatus such as a waste heat boiler to save energy.

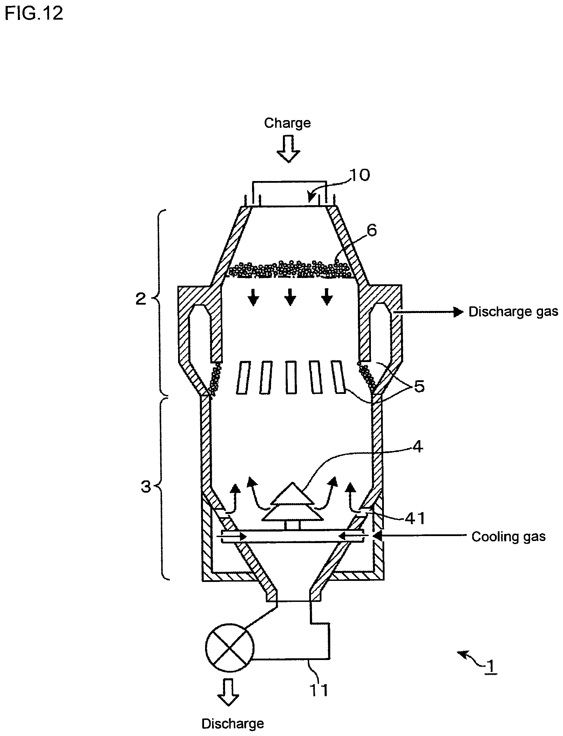

Examples of the known coke dry quenching equipment include those disclosed in Patent Documents 1 and 2. As shown in Fig. 12, conventional coke dry quenching equipment 1 has a structure in which a pre-chamber 2 having a coke charging hole 10 formed at its upper portion is vertically connected to a cooling chamber 3 including a coke discharge unit 11 disposed at its lower portion. A blast head 4 that is used as cooling gas supply device for injecting a cooling gas such as an inert gas and to make the descending flow of coke uniform is disposed in the bottom central portion of the cooling chamber 3. A part of the cooling gas is supplied to the cooling chamber 3 from different cooling gas supply device (for example, supply ports 41) disposed circumferentially in an inclined portion of the cooling chamber 3 that is located in the lower part thereof. Moreover, a plurality of divided small flues 5 for discharging the cooling gas are formed so as to circumferentially surround the barrel portion of the pre-chamber 2.

In the above configuration, high temperature coke 6 is charged into the chambers through the coke charging hole 10 and continuously discharged from the bottom of the chambers through the coke discharge unit 11. During this process, the coke 6 descending inside the chambers is cooled by heat exchange with the cooling gas from the lower portion of the chamber that includes the blast head 4. The cooling gas increased in temperature by heat exchange is discharged from the chambers through the small flues 5. The discharged gas passes through a dust removing unit (not shown), is then supplied to a heat recovery apparatus (not shown) such as a waste gas boiler to recover the heat, and is again supplied as the cooling gas to the chambers.

However, in the conventional coke quenching equipment described above, the vertically downward flow of the coke near the inlets of the small flues 5 is inefficient, so that when the heat exchanged gas passes through the small flues 5, blocks of the coke can often flow into the small flues 5 together with the gas flow. This results in a problem in that the operation must be stopped due to the accumulation of the coke in the small flues 5 or the clogging of the small flues 5 with the coke. This problem limits the volume of the cooling gas flow, and the volume of the flow cannot be increased. This results in difficulty in achieving size reduction of the equipment.

Patent Document 3 discloses coke quenching equipment in which measures are taken for preventing heat damage to an annular passage connecting small flues 5. Patent Document 4 discloses coke dry quenching equipment in which grids are disposed at the inlets of small flues 5 to prevent coke from flowing into the small flues 5. Judging from the structures shown in the drawings in Patent Documents 3 and 4, although not described therein, the lower ends of the small flues 5 are disposed closer to the furnace core than the side wall of the cooling chamber 3. However, the inflow of the coke cannot be prevented unless the grid is provided as in Patent Document 4. This is because, in Patent Documents 3 and 4, the positions of the lower ends of the small flues 5 are not determined in relation to the overall flow state of the coke and the cooling gas in the cooling chamber 3, and this is not disclosed in Patent Documents 3 and 4.

Patent Document 5 describes an improvement of the flow of coke in a funnel-like portion in the lower portion of a chamber by providing first and second gas distributers in a bunker main body. However, the main object of Patent Document 5 is to improve the flow in the funnel-like portion in the lower portion of the chamber, and no structure for preventing the flow of coke into small flues is provided. More specifically, the improvement of the flow of coke in a part of the chamber does not alone provide a measure for preventing the inflow of the coke. Moreover, when the gas distributors are supported in the manner described in Patent Document 5, a problem arises in that they can fall off due to wear against the coke. In particular, since the diameter of the supporting member for the second gas distributor is small, the second gas distributor is more likely to fall off.

[Patent Document 1] Japanese Patent Application Laid-Open No. 2002-265950.
[Patent Document 2] Japanese Patent Application Laid-Open No. 2003-183662.
[Patent Document 3] Japanese Patent Application Laid-Open No. Sho 54-32505.
[Patent Document 4] Japanese Utility Model Application Laid-Open No. Sho 62-153352.
[Patent Document 5] Japanese Utility Model Publication No. Sho 59-17883.

GB 1, 061, 412 discloses a dryquenching plant for coke or other materials comprising a chamber having charging means located in the upper part thereof, discharching means located in the lower part thereof, gas-collecting means including outlets distributed around the periphery of the chamber, said outlets being connected with a channel outside the chamber, said channel being connected to the boiler means for the plant, and a pre-chamber for ensuring a constant supply of hot coke arranged above the entrance to the outlets of the gas-collecting means. US 1,296,094 A discloses an apparatus for cooling incandescent coke as it passes through a container, the container comprising a distributor built into the container, and means for introducting cooling gases through a distributor into the charge of coke.

### DISCLOSURE OF THE INVENTION

### PROBLEMS TO BE SOLVED BY THE INVENTION

The present invention has been made in view of the above circumstances. An object of the invention is to provide coke dry quenching equipment in which the positions of the lower edges of small flues for discharging the cooling gas are determined in relation to the overall flow state of coke and cooling gas in a cooling chamber to thereby suppress the accumulation of the coke in the small flues or the clogging of the small flues with the coke.

Another obj ect of the invention is to provide coke dry quenching equipment in which an increase in the volume of the cooling gas flow is less limited, so that the size of the equipment can be reduced.

### MEANS FOR SOLVING THE PROBLEMS

The present invention is defined by the claims.

Coke dry quenching equipment of the present invention includes : a pre-chamber; a cooling chamber that follows a lower part of the pre-chamber; cooling gas supply device for supplying a cooling gas to the cooling chamber; and a plurality of divided small flues for discharging the cooling gas, the plurality of divided small flues being disposed in a circumference of the pre-chamber, wherein high temperature coke is charged from an upper portion of the pre-chamber, the coke is cooled by the cooling gas, and the cooled coke is discharged from a discharge hole provided in a lower portion of the cooling chamber. The coke dry quenching equipment is characterized in that a main blast head is placed on an upper portion of a supporting member disposed in a lower part of the cooling chamber, a conical portion is formed in the lower portion of the cooling chamber, at least one small blast head having a diameter less than a diameter of the main blast head is suspended from a lower portion of the supporting member, and lower edges of the small flues are disposed closer to a furnace core than a side wall surface of the cooling chamber and are positioned between the side wall surface of the cooling chamber and an outer circumferential edge of the main blast head, wherein the main blast head and the small blast head are disposed on the central axis of the conical portion, and
the supporting member is a cross-shaped supporting member disposed penetrating the side wall of the conical portion. When the lower edges of the small flues are positioned on the furnace core side as described above, it is preferable to control the amount of the coke discharged in the manner described below. Preferably, the coke dry quenching equipment further includes a coke discharge unit connected to the discharge hole in the lower portion of the cooling chamber, and an amount of the coke discharged is controlled such that residence time T (= κV/Q) of the coke in the cooling chamber is 1.5 ≤ T ≤ 3. Here, "V" is an internal volume (m³) of the cooling chamber. "Q" is the amount (t/h) of the coke discharged, "κ" is a bulk density (t/m³) of the coke. Preferably, a furnace inner surface of the pre-chamber is aligned with the lower edges of the small flues or is positioned closer to the furnace core than the lower edges of the small flues. Preferably, a protrusion protruding toward the furnace core is provided in a lower portion of the furnace inner surface of the pre-chamber. Preferably, back-side surfaces of the small flues are inclined, for example, at 55 to 80 degrees. Preferably, a partition plate is disposed in each small flue so as to vertically partition the each small flue.

### EFFECTS OF THE INVENTION

In the present invention, the coke dry quenching equipment including the pre-chamber and the cooling chamber is configured as follows. The main blast head is placed on the upper portion of the supporting member disposed in the lower part of the cooling chamber, and at least one small blast head having a diameter less than that of the main blast head is suspended from the lower portion of the supporting member. In addition, the lower edges of the small flues are disposed closer to the furnace core than the side wall surface of the cooling chamber and are positioned between the side wall surface of the cooling chamber and the outer circumferential edge of the main blast head. With this configuration, the vertically downward movement of the coke in the small flues and in the vicinity thereof is facilitated. Therefore, the flow of the coke into the small flues together with the cooling gas can be suppressed significantly.

Since the vertically downward movement of the coke in the small flues and in the vicinity thereof is facilitated according to the present invention, the flow of the coke into the small flues together with the cooling gas can be significantly suppressed. Therefore, the volume of the flow of the cooling gas is not limited, so that the volume of the flow can be increased. In this manner, the cooling efficiency of the equipment is improved, so that the size of the chamber can be reduced.

### BRIEF DESCRIPTION OF THE DRAWINGS

Fig. 1 is a schematic diagram illustrating coke dry quenching equipment of a first embodiment of the present invention.
Fig. 2 is a horizontal cross-sectional view of the above coke dry quenching equipment.
Fig. 3 is a partial view of the above coke dry quenching equipment.
Fig. 4 is a set of diagrams for describing the residence time of coke in the above coke dry quenching equipment.
Fig. 5 is a diagram for describing the operation of the above coke dry quenching equipment.
Fig. 6 is a set of diagrams for describing the operation of the above coke dry quenching equipment.
Fig. 7 is a set of diagrams for describing the effects of the above coke dry quenching equipment.
Fig. 8 is a schematic diagram illustrating coke dry quenching equipment of a second embodiment of the present invention.
Fig. 9 is a diagram illustrating a modified embodiment of the first and second embodiments.
Fig. 10 is a diagram illustrating another modified embodiment of the first and second embodiments.
Fig. 11 is a diagram illustrating another modified embodiment of the first and second embodiments.
Fig. 12 is a schematic diagram of the furnace body of conventional coke dry quenching equipment.

### DESCRIPTION OF REFERENCE NUMERALS

1 coke dry quenching equipment
10 coke charging hole
2 pre-chamber
3 cooling chamber
31 side wall surface (furnace inner surface)of cooling chamber
4 blast head
41 cooling gas supply port
43 main blast head
44 small blast head
5 small flue
55 lower end of small flue
56 back surface (back-side inclined portion) of small flue
57 partition plate
6 coke
7 cooling gas
8 side wall surface (furnace inner surface) of pre-chamber
81 protrusion

### BEST MODE FOR CARRYING OUT THE INVENTION

Preferred embodiments of coke dry quenching equipment of the present invention will be described in detail with reference to the drawings. However, the technical scope of the present invention is not construed as being limited to the description of the embodiments.

### (First embodiment)

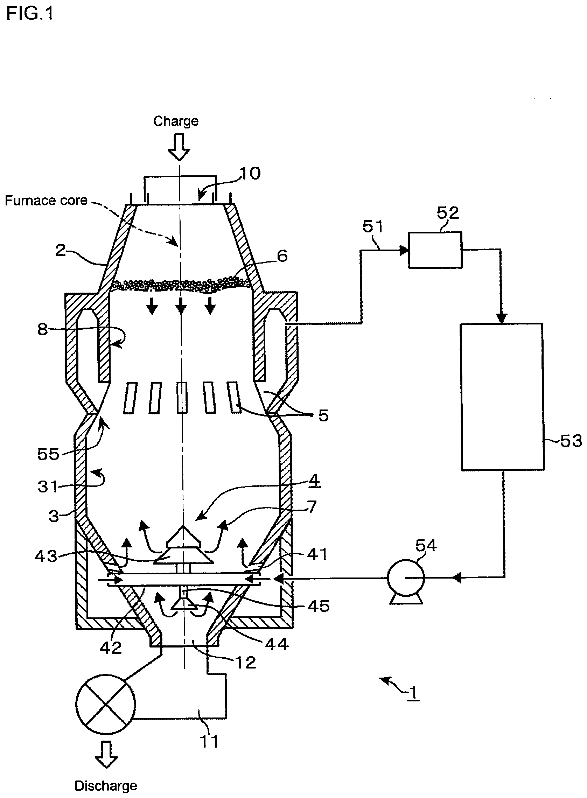

As shown in Fig. 1, coke dry quenching equipment 1 of the present embodiment is configured to include a pre-chamber 2 having a coke charging hole 10 in its upper portion and a cooling chamber 3 having a coke discharge hole 12 in its bottom portion, the pre-chamber 2 and the cooling chamber 3 being connected vertically. The pre-chamber 2 and the cooling chamber 3 can be formed of, for example, a refractory material such as brick. High temperature coke 6 generated in, for example, a coke oven is charged into the pre-chamber 2 from the coke charging hole 10 using a coke transferring unit (not shown) such as a bucket. The coke 6 charged into the pre-chamber 2 descends gradually and enters the cooling chamber 3. The coke 6 that enters the cooling chamber 3 continues descending gradually, is cooled by a cooling gas 7, and continuously discharged through a coke discharge unit 11 disposed at the coke discharge hole 12. Generally, in operation, the coke 6 is discharged continuously through the coke discharge unit 11 and replenished on a batch basis. However, the invention is not limited thereto.

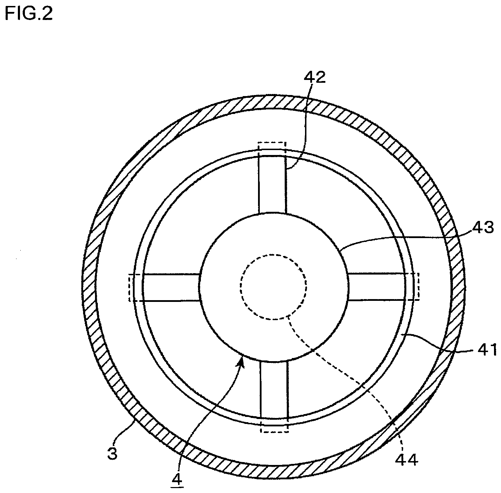

The cooling chamber 3 is formed to have a cone-shaped lower portion (for example, a turned conical or turned truncated conical shaped portion) . A blast head 4 that is used as cooling gas supply device for injecting a cooling gas such as an inert gas and to make the descending flow of the coke 6 uniform is disposed in the central portion of the conical portion (for example, on the center axis thereof) . As shown in Fig. 2, the blast head 4 has a structure in which a main blast head 43 is placed on the upper portion of a substantially cross-shaped supporting member 42 disposed penetrating the side wall of the conical portion. In addition, a small blast head 44 having an outer diameter smaller than that of the main blast head 43 is suspended from the supporting member 43 so as to be located below the main blast head 43. The number of the small blast heads is not limited to one, and a plurality of small blast heads may be suspended one above another.

No particular limitation is imposed on the shape of the main blast head 43. For example, as shown in Fig. 1, the main blast head 43 includes a cap member formed to have a substantially conical shape and is configured such that the cooling gas 7 is injected circumferentially from a gas injection port (not shown) formed in the cap member. No particular limitation is imposed also on the shape of the small blast head 44. For example, as shown in Fig. 1, the small blast head 44 includes a cap member formed to have a substantially conical shape and is suspended from the supporting member 42 through a connection member 45 extending vertically. The small blast head has a gas injection port (not shown) on its lower side and is configured such that the cooling gas 7 supplied through a gas passage (not shown) formed inside the connection member 45 is injected circumferentially.

A part of the cooling gas 7 is supplied to the cooling chamber 3 also from cooling gas supply device (for example, a cooling gas supply port 41) formed circumferentially in the inclined surface of the conical portion of the cooling chamber 3. The cooling gas supply port 41 is disposed preferably near the upper surface of the supporting member 42, as shown in Figs . 1 and 2, or may be disposed at the same height as the height of the supporting member 42. The structure for supplying the cooling gas is not limited to the structure in which the gas is supplied from both the blast head 4 and the cooling gas supply port 41. The cooling gas 7 may be supplied from one of the blast head 4 and the supply port 41.

A plurality of divided small flues 5 for discharging the cooling gas 7 are formed so as to circumferentially surround the straight tubular barrel portion of the pre-chamber 2. A flue 51 is connected to the small flues 5. The flue 51 is connected to a heat recovery apparatus 53 such as a waste heat boiler through a dust removing unit 52. The gas cooled in the heat recovery apparatus 53 is again supplied as the cooling gas to the cooling chamber 3 by blowing device 54 such as a blower.

The coke dry quenching equipment 1 of the present embodiment is configured such that lower edges 55 of the small flues 5 are positioned radially closer to a furnace core (a central axis) than the side wall surface (furnace inner surface) of the cooling chamber 3. More specifically, as shown in Fig. 1 as an example, the upper side wall of the cooling chamber 3 is inclined toward the furnace core, and the lower edges 55 of the small flues 5 are connected to the upper edge of the upper side wall.

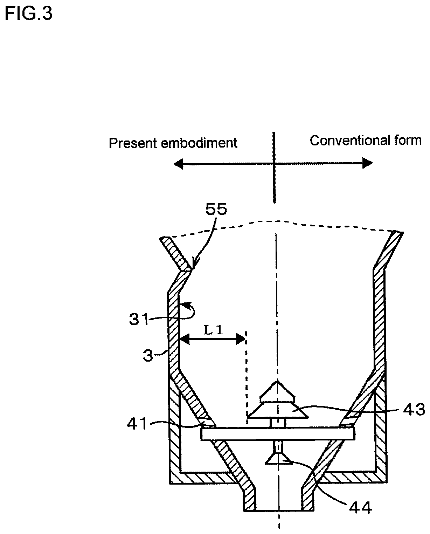

The lower edges 55 of the small flues 5 are not simply placed on the furnace core side. The positions of the lower edges 55 of the small flues 5 are determined in relation to the overall (global) flow state of the coke 6 and the cooling gas 7 in the cooling chamber 3. More specifically, in the structure shown in Fig. 3 in which the cooling gas 7 is injected circumferentially from the blast head 4, if the lower edges 55 of the small flues 5 are positioned closer to the furnace core than the outer circumferential edge of the main blast head 43 that has the largest diameter, a gas flow concentrated toward the furnace core is formed on the upper side of the cooling chamber 3. In addition, the movement of the coke near the small flues 5 is adversely affected by the blast head. In such a case, the efficiency of heat exchange of the coke 6 on the furnace wall side in the upper portion of the cooling chamber 3 is reduced. Therefore, the lower edges 55 of the small flues 5 are disposed radially closer to the furnace core than a side wall surface 31 of the cooling chamber 3 and positioned between the side wall surface 31 and the outer circumferential edge of the blast head 43 (within a distance L1 from the side wall surface 31).

More preferably, the lower edges 55 of the small flues 5 are placed at least 200 mm away from the side wall surface 31 of the cooling chamber 3 toward the furnace core. By setting the positions of the lower edges 55 of the small flues 5 in the manner described above, the vertically downward flow of the coke 6 in the vicinity of the small flues 5 is improved. In addition, the through-flow (through-passing) of the cooling gas 7 in the vicinity of the side wall surface 31 where the voidage of the coke 6 tends to be relatively greater than that in the central portion is suppressed. In this manner, the flow of the coke 6 into the small flues 5 and the accumulation of the coke 6 in the small flues 5 are prevented.

In coke quenching equipment having a conventional structure, the difference in the amount of descending coke 6 between the central portion and circumferential portion in the cooling chamber 3 is large, and therefore the variations in heat exchange efficiency in the cooling chamber 3 are large. Therefore, to cool the coke 6 to a predetermined temperature (for example, 200°C), the residence time T of the coke 6 in the cooling chamber 3 had to be set to a relatively large value. However, when the residence time T is set large, the flowing rate of the coke 6 descending in the cooling chamber 3 becomes small. This increases the probability that the coke 6 in the vicinity of the small flues 5 is blown upward by the cooling gas 7 and enters the small flues 5.

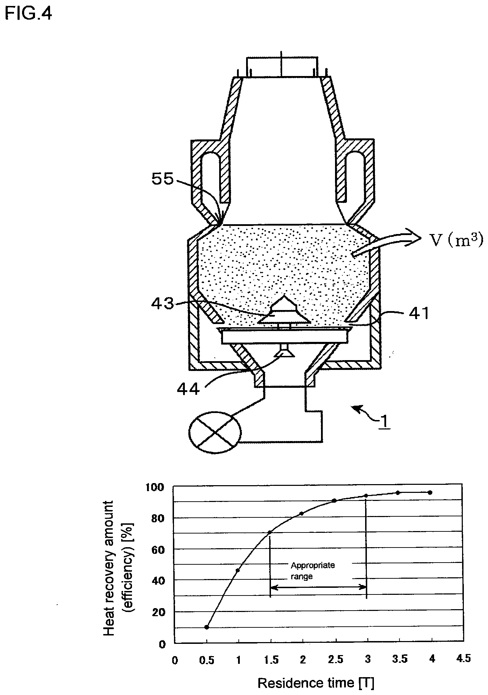

However, in the present embodiment, the lower edges 55 of the small flues 5 are positioned closer to the furnace core, and the small blast head 44 is suspended below the main blast head 43. In this manner, the flow of the coke 6 in the circumferential edge portion of the cooling chamber 3 (in particular, the vertically downward flow of the coke 6 near the small flues 5) is improved. The variations in heat exchange efficiency are thereby improved. Therefore, in the present embodiment, the residence time of the coke 6 in the cooling chamber 3 is set as short as possible to prevent the coke 6 from flowing into the small flues 5. More specifically, as shown in Fig. 4, the amount of the coke 6 discharged from the coke discharge hole 12 is controlled such that the residence time T (= κV/Q) of the coke 6 in the cooling chamber 3 is 1.5 ≤ T ≤ 3. Here, "V" is, for example, the internal volume (m³) of the cooling chamber from the cooling gas supply port 41 to the lower edges 55, but no limitation is imposed on "V." "Q" is the amount (t/h) of discharged coke and is the flow rate of the coke 6 discharged through the coke discharge unit 11. "κ" is the bulk density (t/m³) of the coke 6. In other words, the vertically downward flow of the coke 6 in the small flues 5 and in the vicinity thereof is facilitated by improving the flow of the coke and in consideration of the heat exchange efficiency.

As shown in Fig. 4, when the residence time T is 3 h or more, the heat recovery amount (efficiency) levels off, so that the heat recovery amount (efficiency) is not further improved even when the residence time T is further increased. However, in the coke quenching equipment having a conventional structure, since the heat exchange efficiency is uneven in the cooling chamber 3, the residence time T must be set longer than 3 h. In the present embodiment, the variations in heat exchange efficiency in the cooling chamber 3 are improved, and the residence time T is set to 3 h or less (≤ 3). However, as can be seen from the results shown in Fig. 4, when the residence time T is too short, the heat recovery amount (efficiency) is reduced significantly. Therefore, the residence time T is set to 1.5 h or longer (1.5 ≤).

In the above coke dry quenching equipment 1, the coke 6 charged into the pre-chamber 2 from the coke charging hole 10 gradually descends and enters the cooling chamber 3, as the coke 6 is discharged from the bottom of the cooling chamber 3. The coke 6 is then cooled in the cooling chamber 3 by heat exchange with the cooling gas 7 and discharged through the coke discharge unit 11. Not all the coke 6 descending in the chamber uniformly descends straight down. The coke 6 gradually descends along different paths in different direction due to the influence of the shape and wall surface of the chamber and differences in properties of the coke. In such circumstances, as described as the problems to be solved, the present inventors have focused attention on the following. To suppress the flow of the coke 6 into the small flues 5 due to the flow of the cooling gas 7 passing through the small flues 5 and to discharge, to the outside, the coke 6 flowing into the small flues 5 and accumulated therein, the vertically downward flow of the coke 6 in the small flues 5 and in the vicinity thereof must be facilitated. The inventors have conducted extensive studies and found the following. To facilitate the vertically downward flow in the small flues 5 and in the vicinity thereof in a more reliable manner, it is effective to utilize synergistic effects on the improvement of the flow that are achieved by disposing the lower edges 55 of the small flues 5 closer to the furnace core than the side wall surface 31 of the cooling chamber 3 and suspending the small blast head 44 below the main blast head 43. Thus the invention has been completed.

The inventors think that the reason that the vertically downward flow in the small flues 5 and in the vicinity thereof can be facilitated is as follows.

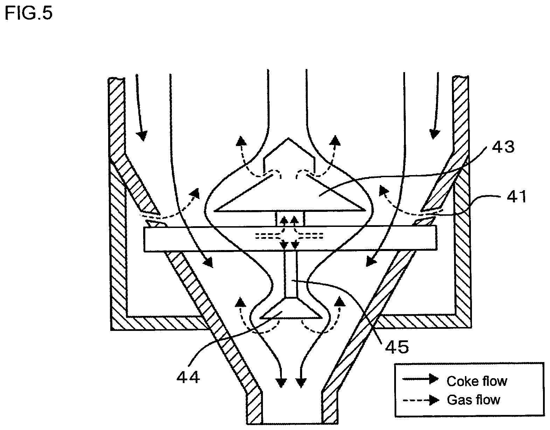

As schematically illustrated in Fig. 5, the flow of the coke 6 descending in the central portion of the cooling chamber 3 is changed to a circumferentially outward flow by the main blast head 43, so that the flow of the coke 6 on the furnace wall side is facilitated. Then a flow directed to the center at the angle of repose is formed below the main blast head 43. The formed flow of coke 6 toward the center is further changed to a circumferentially outward flow by the small blast head 44, so that the flow of the coke 6 on the furnace wall side is facilitated. Then a flow directed to the center at the angle of repose is formed below the small blast head 44, and the coke 6 is discharged through the coke discharge hole 12. By rectifying the flow in the manner described above, the flow of the coke 6 on the furnace wall side is facilitated. Therefore, the vertically downward flow in the small flues 5 and in the vicinity thereof is facilitated, and the difference in the amount of the descending coke in the cooling chamber 3 is improved. In the present embodiment, the flow of the coke schematically shown in Fig. 5 is grasped, and the small blast head 44 is suspended below the main blast head 43. This configuration is advantageous in that the small blast head 44 can be prevented from falling off due to the breakage of the connection member 45 or other members caused by wear against the coke 6.

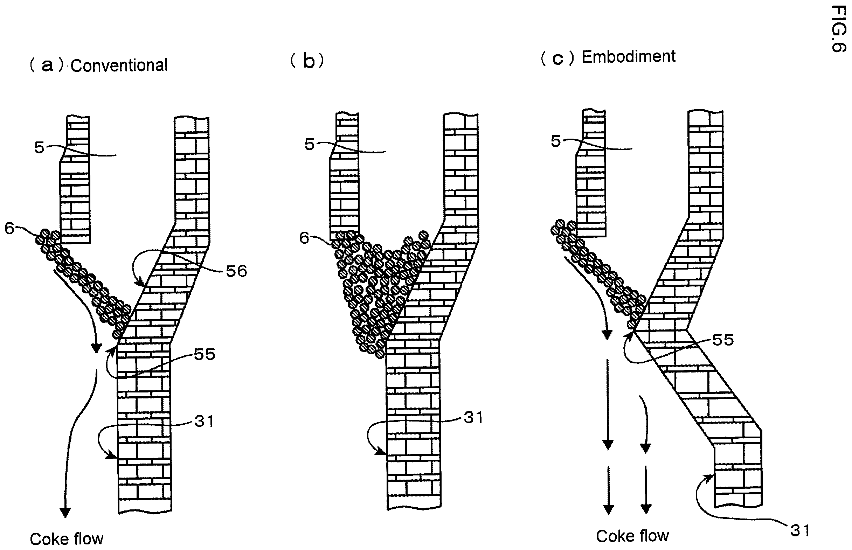

The flow of the coke in the vicinity of the small flues 5 in the conventional structure is schematically shown in Fig. 6(a). As shown in Fig. 6(a), in the vicinity of the inlets of the small flues 5, the coke 6 forming the angle of repose spreads to the back surface (back-side inclined portion) 56 side of each small flue 5, and the descending coke 6 changes its direction toward the inner side. The coke 6 in the cooling chamber 3 is influenced by the side wall surface 31 of the cooling chamber 3 and by the flow state in the lower portion of the chamber, and the vertically downward flow near the side wall surface 31 is very inefficient and tends to be retarded. Therefore, in the conventional structure shown in Fig. 6(a), the vertically downward flow of the coke 6 near the inlets of the small flues 5 above the cooling chamber 3 deteriorates, and the flow rate is reduced, so that the coke 6 is jammed. The reduction in the flow rate near the inlets of the small flues 5 induces the spread of the coke 6 into the small flues 5, as shown in Fig. 6(b). Therefore, the vertically downward flow of the coke 6 in the small flues 5 and in the vicinity thereof is retarded, and the coke 6 is likely to enter the small flues 5 together with the gas flow passing through the small flues 5.

However, as shown in Fig. 6(c), in the present embodiment, the lower edges 55 of the small flues 5 are disposed closer to the furnace core than the side wall surface 31 of the cooling chamber 3 so as to be positioned within the range of L1. In this manner, the flow of the coke 6 near the inlets of the small flues 5 is not influenced by the side wall surface 31 of the cooling chamber 3 that is located below the inlets of the small flues 5, so that a reduction in flow rate can be suppressed significantly. This also facilitates the vertically downward flow of the coke 6 in the small flues 5 and in the vicinity thereof. In addition, by suspending the small blast head 44 to facilitate the flow on the furnace wall surface 31 side, the vertically downward flow of the coke 6 in the small flues 5 and in the vicinity thereof is facilitated in a more reliable manner. Therefore, the flow of the coke 6 into the small flues 5 together with the gas flow can be suppressed significantly. With the configuration of the present embodiment, even when the coke 6 is temporarily accumulated in the small flues 5, the discharge of the coke 6 from the small flues 5 (the descending movement into the cooling chamber 3) is facilitated, so that the clogging of the small flues 5 can be prevented.

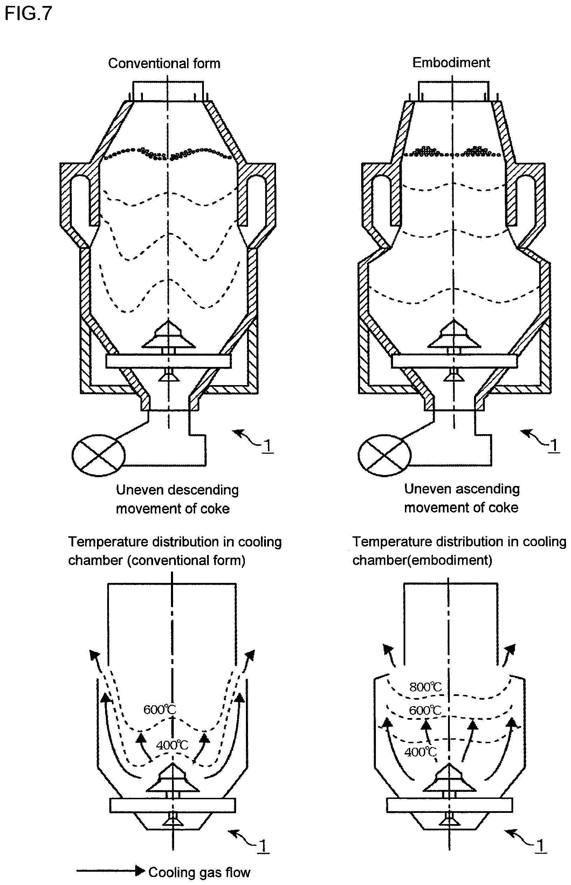

As described above, the vertically downward flow of the coke 6 in the small flues 5 and in the vicinity thereof is facilitated in a reliably manner. Therefore, in the present embodiment, the coke 6 in the chambers 2 and 3 as a whole descends uniformly. The uniformity of descending coke and the temperature distribution in the chambers were measured by actually operating the equipment. As schematically shown in Fig. 7, it was found that the uniformity of the descending coke 6 and the temperature distribution in the chambers were improved. In other words, it is understood that the vertically downward flow of the coke 6 in the small flues 5 and in the vicinity thereof is facilitated by disposing the lower edges 55 of the small flues 5 closer to the furnace core than the side wall surface 31 of the cooling chamber 3 and suspending the small blast head 44 below the main blast head 43. When the vertically downward flow of the coke 6 in the small flues 5 and in the vicinity thereof is facilitated, the flow of the coke 6 into the small flues 5 can be suppressed significantly, as described above.

As described above, in the present embodiment, the vertically downward movement of the coke 6 in the small flues 5 and in the vicinity thereof is facilitated in a reliable manner by disposing the lower edges 55 of the small flues 5 closer to the furnace core than the side wall surface 31 of the cooling chamber 3 so as to be positioned within the range of L1 and suspending the small blast head 44 below the main blast head 43. In this manner, the flow of the coke 6 into the small flues 5 together with the cooling gas 7 passing through the small flues 5 can be suppressed significantly. Therefore, the coke dry quenching equipment 1 can be operated stably. Moreover, device (for example, an air nozzle) for removing the coke 6 flowing into / accumulated in the small flues 5 is not necessarily provided. Therefore, the configuration of the equipment can be simplified.

In the above embodiment, the flow of the coke 6 into the small flues 5 can be suppressed. Therefore, the volume of the flow of the cooling gas 7 is not limited, so that the volume of the flow can be increased. In this manner, the cooling efficiency of the cooling chamber 3 is improved, so that the size of the chamber can be reduced.

In addition, the amount of the cooling gas 7 flowing through the chamber tends to be larger in the side wall portion of the chamber where the voidage tends to be large, and this causes an undesirable reduction in cooling efficiency. However, with the configuration of the present embodiment, this problem can also be resolved. More specifically, by disposing the lower edges 55 of the small flues 5 closer to the furnace core than the side wall surface 31 of the cooling chamber 3, the through-flow (through-passing) of the cooling gas 7 in the vicinity of the side wall surface 31 where the voidage of the coke 6 is large is suppressed, and the difference in the amount of the gas flow between the central portion and side wall portion in the chamber is improved. The overall gas flow can thereby be made uniform. With the aid of the uniformization of the flow of the cooling gas, the cooling efficiency in the cooling chamber 3 is improved significantly. Therefore, the size of the cooling chamber 3 can be further reduced.

### (Second embodiment)

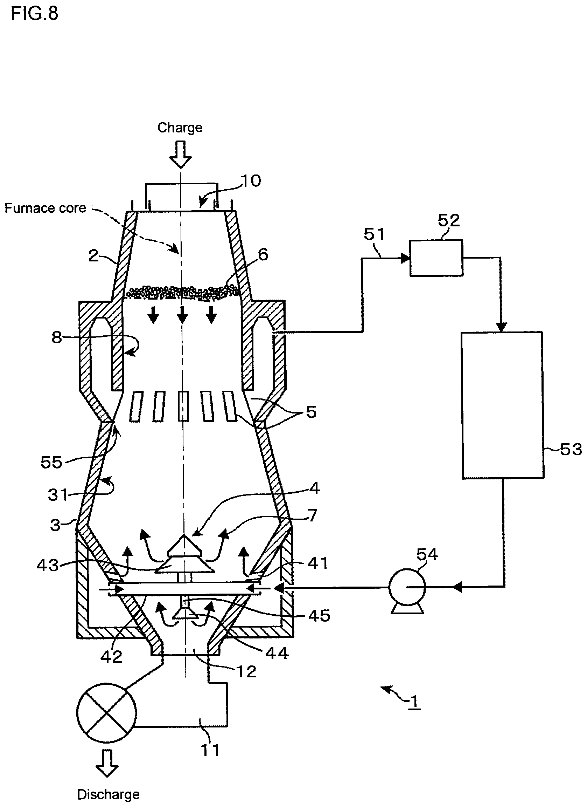

Next, a description is given of coke dry quenching equipment 1 of a second embodiment of the present invention with reference to Fig. 8. The present embodiment is a modified embodiment in which the cooling chamber 3 shown in Fig. 1 is modified. In the configuration of the present embodiment, the vertical portion of the side wall surface 31 of the cooling chamber 3 is eliminated, and the side wall surface 31 is formed into a "bent shape." More specifically, in the exemplary configuration shown in Fig. 8, the lower edges 55 of the small flues 5 are positioned closer to the furnace core than the side wall surface of the cooling chamber that extends from the lower edges 55 of the small flues 5 to a position represented by the arrow for reference numeral 31. In this case, as shown in Fig. 8, the upper side wall of the cooling chamber 3 can be designed such that its inclination angle is the same as the inclination angle of the side wall of the pre-chamber on the bottom side. However, the invention is not limited thereto, and the inclination angles may be different. The same components as those in the coke dry quenching equipment 1 shown in Fig. 1 are denoted by the same numerals, and the detailed description thereof is omitted. With the above configuration, the same effects as those in the first embodiment can be obtained.

Preferably, in the above first and second embodiments, the furnace inner surface (inner side surface) 8 of the pre-chamber 2 is positioned radially closer to the furnace core than the lower edges 55 of the small flues 5, as shown in Figs. 1 and 2, or is aligned with the lower edges 55 of the small flues 5.

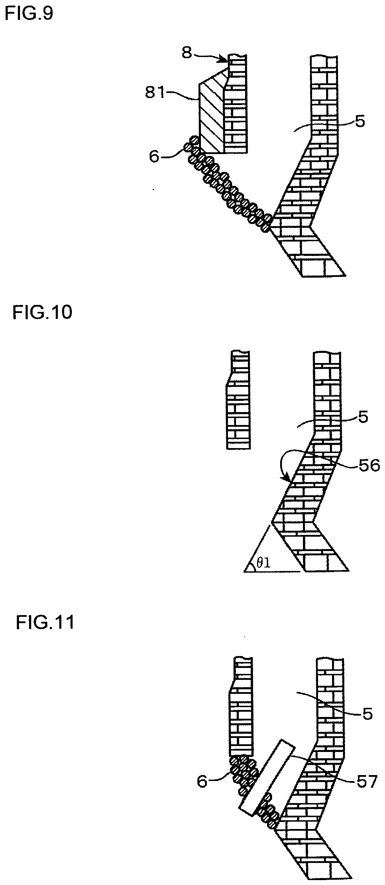

In the first and second embodiments, a protrusion 81 protruding toward the furnace core may be provided in the lower portion of the furnace inner surface 8 of the pre-chamber, as shown in Fig. 9. By providing the protrusion 81, the spreading of the coke 6 forming the angle of repose into the small flues 5 can be suppressed. Therefore, together with the effect of disposing the lower edges 55 of the small flues 5 closer to the furnace core than the side wall surface 31 of the cooling chamber 3, the above-described effects can be obtained in a more reliable manner.

In the first and second embodiments, the back surfaces (back-side inclined portions) 56 of the small flues 5 may be inclined at an angle (inclination angle θ1) of 55 to 80 degrees, as shown in Fig. 10. By inclining the back surfaces 56 of the small flues 5 at an inclination angle θ1, the coke 6 spread at the angle of repose into the small flues 5 can be discharged into the cooling chamber 3 in a facilitated manner. Therefore, together with the effect of disposing the lower edges 55 of the small flues 5 closer to the furnace core than the side wall surface 31 of the cooling chamber 3, the above-described effects can be obtained in a more reliable manner.

In the first and second embodiments, a partition plate 57 for vertically partitioning each small flue 5 may be disposed, as shown in Fig. 11. By disposing the partition plates 57, the amount of the coke 6 flowing into the small flues 5 can be restricted. Therefore, together with the effect of disposing the lower edges 55 of the small flues 5 closer to the furnace core than the side wall surface 31 of the cooling chamber 3, the above-described effects can be obtained in a more reliable manner. In the example shown in Fig. 11, one partition plate 57 is disposed. However, a plurality of partition plates 57 may be disposed.

Embodiments and examples of the present invention have been exemplified above. However, it is apparent for a person skilled in the art that various modifications and changes may be made without departing from the scope of the present invention.

## Claims

1. Coke dry quenching equipment (1) comprising: a pre-chamber (2); a cooling chamber (3) that follows a lower part of the pre-chamber; cooling gas supply device (41) for supplying a cooling gas to the cooling chamber; and a plurality of divided small flues (5) for discharging the cooling gas, the plurality of divided small flues (5) being disposed in a circumference of the pre-chamber (2), wherein high temperature coke is charged from an upper portion of the pre-chamber, the coke is cooled by the cooling gas, and the cooled coke is discharged from a discharge hole (12) provided in a lower portion of the cooling chamber,
a main blast head (43) is placed on an upper portion of a supporting member (42) disposed in a lower part of the cooling chamber; at least one small blast head (44) having a diameter less than a diameter of the main blast head (43) is suspended from the lower portion of the supporting member (42); a conical portion is formed in the lower portion of the cooling chamber; and lower edges of the small flues (5) are disposed closer to a furnace core than a side wall surface (31) of the cooling chamber (3) and are positioned between the side wall surface of the cooling chamber and an outer circumferential edge of the main blast head (43),
the coke dry quenching equipment (1) being **characterized in that**:
the main blast head (43) and the small blast head (44) are disposed on the central axis of the conical portion; and the supporting member (42) being a cross-shaped supporting member disposed penetrating the side wall of the conical portion.

2. The coke dry quenching equipment according to claim 1, wherein the lower edges of the small flues are placed at least 200 mm away from the side wall surface of the cooling chamber toward the furnace core.

3. The coke dry quenching equipment according to claim 1 or 2, further comprising a coke discharge unit connected to the discharge hole in the lower portion of the cooling chamber, and wherein the coke discharge unit is configured to control an amount of the coke discharged such that residence time T (= κV/Q) of the coke in the cooling chamber is 1.5 ≤ T ≤ 3, where "V" is an internal volume (m³) of the cooling chamber; "Q" is the amount (t/h) of the coke discharged; and "κ" is a bulk density (t/m³) of the coke.

4. The coke dry quenching equipment according to any one of claims 1 to 3, wherein a furnace inner surface of the pre-chamber is aligned with the lower edges of the small flues or is positioned closer to the furnace core than the lower edges of the small flues.

5. The coke dry quenching equipment according to any one of claims 1 to 4, wherein a protrusion protruding toward the furnace core is provided in a lower portion of the furnace inner surface of the pre-chamber.

6. The coke dry quenching equipment according to any one of claims 1 to 5, wherein back-side surfaces of the small flues are inclined at 55 to 80 degrees.

7. The coke dry quenching equipment according to any one of claims 1 to 6, wherein a partition plate is disposed in each small flue so as to vertically partition the each small flue.

## Patentansprüche

1. Anlage (1) zur Trockenlöschung von Koks, die aufweist: eine Vorkammer (2); eine Kühlkammer (3), die einem Unterteil der Vorkammer folgt; eine Kühlgas-Zufuhrvorrichtung (41) zum Zuführen eines Kühlgases zur Kühlkammer; und mehrere geteilte kleine Abzüge (5) zum Abgeben des Kühlgases, wobei die mehreren geteilten kleinen Abzüge (5) in einem Umfang der Vorkammer (2) angeordnet sind, wobei Hochtemperaturkoks von einem oberen Abschnitt der Vorkammer aufgegeben wird, der Koks durch das Kühlgas gekühlt wird und der gekühlte Koks aus einem Abgabeloch (12) abgegeben wird, das in einem unteren Abschnitt der Kühlkammer vorgesehen ist,
ein Hauptwindkopf (43) auf einem oberen Abschnitt eines Stützteils (42) platziert ist, das in einem Unterteil der Kühlkammer angeordnet ist; mindestens ein kleiner Windkopf (44) mit einem kleineren Durchmesser als ein Durchmesser des Hauptwindkopfs (43) vom unteren Abschnitt des Stützteils (42) abgehängt ist; ein konischer Abschnitt im unteren Abschnitt der Kühlkammer gebildet ist; und Unterkanten der kleinen Abzüge (5) näher an einem Ofenkern als eine Seitenwandfläche (31) der Kühlkammer (3) angeordnet sind und zwischen der Seitenwandfläche der Kühlkammer und einer Außenumfangskante des Hauptwindkopfs (43) positioniert sind,
wobei die Anlage (1) zur Trockenlöschung von Koks **dadurch gekennzeichnet ist, dass**:
der Hauptwindkopf (43) und der kleine Windkopf (44) auf der Mittelachse des konischen Abschnitts angeordnet sind; und dass das Stützteil (42) ein kreuzförmiges Stützteil ist, das die Seitenwand des konischen Abschnitts durchdringend angeordnet ist.

2. Anlage zur Trockenlöschung von Koks nach Anspruch 1, wobei die Unterkanten der kleinen Abzüge mindestens 200 mm weg von der Seitenwandfläche der Kühlkammer zum Ofenkern platziert sind.

3. Anlage zur Trockenlöschung von Koks nach Anspruch 1 oder 2, ferner mit einer Koksabgabeeinheit, die mit dem Abgabeloch im unteren Abschnitt der Kühlkammer verbunden ist, und wobei die Koksabgabeeinheit so konfiguriert ist, dass sie eine Menge des abgegebenen Kokses so steuert, dass die Verweilzeit T (= κV/Q) des Kokses in der Kühlkammer 1,5 ≤ T ≤ 3 beträgt, wobei "V" ein Innenvolumen (m³) der Kühlkammer ist; "Q" die Menge (t/h) des abgegebenen Kokses ist; und "κ" eine Schüttdichte (t/m³) des Kokses ist.

4. Anlage zur Trockenlöschung von Koks nach einem der Ansprüche 1 bis 3, wobei eine Ofeninnenfläche der Vorkammer zu den Unterkanten der kleinen Abzüge ausgerichtet ist oder näher am Ofenkern als die Unterkanten der kleinen Abzüge positioniert ist.

5. Anlage zur Trockenlöschung von Koks nach einem der Ansprüche 1 bis 4, wobei ein Vorsprung, der zum Ofenkern vorsteht, in einem unteren Abschnitt der Ofeninnenfläche der Vorkammer vorgesehen ist.

6. Anlage zur Trockenlöschung von Koks nach einem der Ansprüche 1 bis 5, wobei Rückseitenflächen der kleinen Abzüge mit 55 bis 80 Grad geneigt sind.

7. Anlage zur Trockenlöschung von Koks nach einem der Ansprüche 1 bis 6, wobei eine Trennplatte in jedem kleinen Abzug so angeordnet ist, dass sie jeden kleinen Abzug vertikal trennt.

## Revendications

1. Équipement d'extinction à sec de coke (1) comprenant : une préchambre (2) ; une chambre de refroidissement (3) qui suit une partie inférieure de la préchambre ; un dispositif de distribution de gaz de refroidissement (41) pour distribuer un gaz de refroidissement dans la chambre de refroidissement ; et une pluralité de petits conduits de fumée divisés (5) pour évacuer le gaz de refroidissement, la pluralité de petits conduits de fumée divisés (5) étant disposés dans une circonférence de la préchambre (2), dans lequel du coke à haute température est chargé depuis une partie supérieure de la préchambre, le coke est refroidi par le gaz de refroidissement, et le coke refroidi est évacué par un trou d'évacuation (12) disposées dans une partie inférieure de la chambre de refroidissement,
une tête d'évent principale (43) est placée sur une partie supérieure d'un élément de support (42) disposé dans une partie inférieure de la chambre de refroidissement ; au moins une petite tête d'évent (44) ayant un diamètre inférieur à un diamètre de la tête d'évent principale (43) est suspendue depuis la partie inférieure de l'élément de support (42) ; une partie conique est formée dans la partie inférieure de la chambre de refroidissement ; et des bords inférieurs des petits conduits de fumée (5) sont disposés plus près d'un coeur du four qu'une surface de paroi latérale (31) de la chambre de refroidissement (3) et sont positionnés entre la surface de paroi latérale de la chambre de refroidissement et un bord circonférentiel externe de la tête d'évent principale (43), l'équipement d'extinction à sec de coke (1) étant **caractérisé en ce que** :
la tête d'évent principale (43) et la petite tête d'évent (44) sont disposées sur l'axe central de la partie conique ; et l'élément de support (42) étant un élément de support en forme de croix disposé de façon à pénétrer la paroi latérale de la partie conique.

2. Équipement d'extinction à sec de coke selon la revendication 1, dans lequel les bords inférieurs des petits conduits de fumée sont placés à au moins 200 mm de la surface de paroi latérale de la chambre de refroidissement vers le coeur du four.

3. Équipement d'extinction à sec de coke selon la revendication 1 ou 2, comprenant en outre une unité d'évacuation de coke raccordée au trou d'évacuation dans la partie inférieure de la chambre de refroidissement, et dans lequel l'unité d'évacuation de coke est configurée pour réguler une quantité du coke évacué de sorte que le temps de séjour T (= κV/Q) du coke dans la chambre de refroidissement soit 1,5 ≤ T ≤ 3, où "V" est un volume interne (m³) de la chambre de refroidissement ; "Q" est la quantité (t/h) du coke évacué ; et "κ" est la masse volumique apparente (t/m³) du coke.

4. Équipement d'extinction à sec de coke selon l'une quelconque des revendications 1 à 3, dans lequel une surface interne de four de la préchambre est aligné avec les bords inférieurs des petits conduits de fumée ou est positionnée plus près du coeur du four que les bords inférieurs des petits conduits de fumée.

5. Équipement d'extinction à sec de coke selon l'une quelconque des revendications 1 à 4, dans lequel une protubérance faisant saillie vers le coeur du four est disposée dans une partie inférieure de la surface interne du four de la préchambre.

6. Équipement d'extinction à sec de coke selon l'une quelconque des revendications 1 à 5, dans lequel des surfaces côté arrière des petits conduits de fumée sont inclinées à 55 à 80 degrés.

7. Équipement d'extinction à sec de coke selon l'une quelconque des revendications 1 à 6, dans lequel une plaque de séparation est disposée dans chaque petit conduit de fumée de façon à séparer verticalement chaque petit conduit de fumée.
